(19) Europäisches Patentamt
European Patent Office
Office européen des brevets

(11) **EP 4 377 651 B1**

(12) **FASCICULE DE BREVET EUROPEEN**

(45) Date de publication et mention
de la délivrance du brevet:
**03.09.2025 Bulletin 2025/36**

(21) Numéro de dépôt: **22747355.0**

(22) Date de dépôt: **26.07.2022**

(51) Classification Internationale des Brevets (IPC):
**G01L 9/00** *(2006.01)*        **G01L 11/02** *(2006.01)*
**G01B 11/16** *(2006.01)*

(52) Classification Coopérative des Brevets (CPC):
**G01L 9/0032; G01B 11/18; G01L 11/025**

(86) Numéro de dépôt international:
**PCT/EP2022/070941**

(87) Numéro de publication internationale:
**WO 2023/006746 (02.02.2023 Gazette 2023/05)**

(54) **PROCEDE DE MESURE DE LA VARIATION DE PRESSION S'APPLIQUANT SUR UN TUYAU, DISPOSITIF DE MESURE ET INSTALLATION ASSOCIES**

VERFAHREN ZUR MESSUNG DER DRUCKÄNDERUNG AUF EINEM ROHR, ZUGEHÖRIGE MESSVORRICHTUNG UND VORRICHTUNG

METHOD FOR MEASURING THE VARIATION IN PRESSURE APPLIED TO A PIPE, ASSOCIATED MEASUREMENT DEVICE AND APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2021 FR 2108270**

(43) Date de publication de la demande:
**05.06.2024 Bulletin 2024/23**

(73) Titulaire: **Commissariat à l'Energie Atomique et aux Energies Alternatives
75015 Paris (FR)**

(72) Inventeur: **MAURIN, Laurent
91191 Gif-sur-Yvette Cedex (FR)**

(74) Mandataire: **Brevalex
Tour Trinity
1 B Place de la Défense
92400 Courbevoie (FR)**

(56) Documents cités:
**WO-A1-2004/081509        WO-A1-2009/032881
US-A1- 2015 285 626        US-B1- 6 233 374**

**Description**

**DOMAINE TECHNIQUE**

La présente invention concerne un procédé de mesure, un dispositif de mesure et une installation comprenant un tel dispositif de mesure.

L'invention s'applique au domaine de l'instrumentation, et plus précisément à la mesure non intrusive d'une variation de pression hydrostatique régnant à l'intérieur d'un tuyau, à la mesure de pression absolue, ou encore à la mesure de variations d'efforts longitudinaux appliqués au tuyau.

**ÉTAT DE LA TECHNIQUE ANTÉRIEUR**

Il a été proposé, par exemple dans le document FR 2 864 202, de réaliser une mesure non intrusive de la pression interne d'un tuyau, à partir d'une mesure de ses déformations en surface de ce tuyau.

Néanmoins, les procédés de mesure connus ne donnent pas entière satisfaction.

En effet, dans de tels procédés, l'interdépendance entre les variations de pression interne (ou externe) du tuyau d'une part, et les variations des efforts longitudinaux que subit ce même tuyau d'autre part, n'est pas prise en compte.

Ainsi, l'influence des efforts longitudinaux sur la mesure de la variation de pression peut devenir rapidement significative dès lors que, par exemple, le tuyau est soumis à des encastrements de diverses natures, ainsi qu'à des variations de température, générant des dilatations différentielles, et par conséquent des variations d'efforts longitudinaux indésirables.

Par exemple, pour un tuyau en acier de diamètre 5,08 cm (ou 2 pouces) en Schedule 80 (épaisseur de paroi de 5,54 mm), une variation des efforts longitudinaux de seulement 190 N (newton) génère une erreur typique de mesure de l'ordre du bar si elle n'est pas corrigée, c'est-à-dire de l'ordre de grandeur de la précision de mesure requise dans de telles applications pour cette gamme de tuyau.

Le document WO2009/032881 A1 décrit un procédé de mesure de la distribution de pression et de température d'un tuyau à l'aide de réseaux de Bragg disposés dans une fibre optique enroulée autour du tuyau.

Un but de l'invention est donc de proposer un procédé de mesure permettant de s'affranchir de l'interdépendance entre variations de pression et variations des efforts longitudinaux subies par un tuyau.

**EXPOSÉ DE L'INVENTION**

À cet effet, l'invention a pour objet un procédé de mesure comprenant, pour au moins une zone de mesure d'une portion d'un tuyau, la portion du tuyau présentant une forme cylindrique et s'étendant le long d'un axe central, les étapes :

- mesure d'une puissance et d'une fréquence d'une raie Brillouin d'un rayonnement rétrodiffusé pour déterminer une variation d'une composante mécanique, suivant une direction de mesure associée à ladite zone de mesure, d'une déformation locale correspondante du tuyau, la composante mécanique étant la composante de la déformation qui est indépendante de la déformation thermique du tuyau ;
- détermination d'une variation d'une première pression, parmi une pression interne du tuyau et une pression externe s'appliquant sur le tuyau depuis l'extérieur; et
- calcul :

  a) d'une variation d'une deuxième pression parmi la pression interne et la pression externe, distincte de la première pression, uniquement à partir de la variation de la composante mécanique de la déformation mesurée et de la variation de la première pression déterminée, la direction de mesure définissant, avec un plan normal à l'axe central, un angle de mesure $\varphi_{\Delta P}$ égal à :

$$\phi_{\Delta P} = \pm \arctan\left(\sqrt{v}\right) \bmod \pi$$

  et/ou

  b) d'une variation d'un effort longitudinal exercé sur le tuyau uniquement à partir de la variation de la composante mécanique de la déformation mesurée et de la variation de la première pression déterminée, la direction de mesure définissant, avec le plan normal à l'axe central, un angle de mesure $\phi_{\Delta F}$ égal à :

$$\phi_{\Delta F} = \pm \arctan \left( \sqrt{\frac{(1+v)\rho_0^2 + (1-v)r^2}{2vr^2}} \right) \mod \pi$$

où « arctan » est la fonction arc-tangente ;

r est une distance de la zone de mesure par rapport à l'axe central ;

$p_0$ est une grandeur égale à un rayon externe $r_{0,ext}$ de la portion du tuyau à un instant de référence prédéterminé, si la première pression est la pression externe, et à un rayon interne $r_{0,int}$ de la portion du tuyau à l'instant de référence prédéterminé, si la première pression est la pression interne ; et

v est le coefficient de Poisson du matériau dans lequel est réalisée la portion du tuyau.

En effet, avec des axes de mesure orientés suivant de tels angles remarquables, la mesure des variations de pression (interne ou externe) ne dépend plus des variations d'efforts longitudinaux, et réciproquement.

De cette façon, la seule connaissance de la composante mécanique des déformations du tuyau (et, éventuellement, des variations de pression externe, respectivement interne, si elles existent) suffit à déterminer les variations de pression interne, respectivement externe.

Une telle solution est bien plus avantageuse que celle qui consisterait, par exemple, à mesurer les variations d'efforts longitudinaux appliqués au tuyau au moyen d'un capteur de force ou de déplacement fixé à sa surface d'une part, et à un point fixe dissocié dudit tuyau d'autre part. En effet, il n'est pas toujours possible de trouver un point véritablement fixe auquel accrocher un tel capteur. En outre, le capteur de force est, lui-même, susceptible de modifier de manière sensible le comportement du tuyau, en lui imposant des déformations mécaniques supplémentaires dont l'amplitude peut être suffisante pour induire des erreurs de mesure significatives, par exemple de l'ordre du bar pour un tuyau en acier de diamètre 5,08 cm (ou 2 pouces) en Schedule 80 si l'effort additionnel dû à la présence de ce capteur est de l'ordre de 190 N.

Suivant d'autres aspects avantageux de l'invention, le procédé de mesure comporte une ou plusieurs des caractéristiques suivantes, prise(s) isolément ou suivant toutes les combinaisons techniquement possibles :

▪ pour au moins une zone de mesure, la première pression est la pression externe et la deuxième pression est la pression interne, la variation de la pression interne étant calculée, lors de l'étape (a), selon :

$$\Delta P_{int} = \frac{r^2 E\left(r_{0,ext}^2 - r_{0,int}^2\right)}{r_{0,int}^2 \left[r_{0,ext}^2 + (1-2v)r^2\right]} \Delta\varepsilon_{mec,mes} + \frac{r_{0,ext}^2 \left[r_{0,int}^2 + (1-2v)r^2\right]}{r_{0,int}^2 \left[r_{0,ext}^2 + (1-2v)r^2\right]} \Delta P_{ext}$$

où $\Delta P_{int}$ est la variation de la pression interne ;

$\Delta P_{ext}$ est la variation de la pression externe déterminée ;

E est le module d'Young du matériau dans lequel la portion du tuyau est réalisée ; et

$\Delta\varepsilon_{mec,mes}$ est la variation de la composante mécanique de la déformation mesurée ;

▪ pour au moins une zone de mesure, la première pression est la pression externe, la variation de l'effort longitudinal étant calculée, lors de l'étape (b), selon :

$$\Delta F = \frac{\pi E\left(r_{0,ext}^2 - r_{0,int}^2\right)\left(r^2 + r_{0,ext}^2\right)}{r_{0,ext}^2 + (1-2v)r^2} \Delta\varepsilon_{mec,mes} - \frac{2\pi v r_{0,ext}^2 \left(r_{0,ext}^2 - r_{0,int}^2\right)}{r_{0,ext}^2 + (1-2v)r^2} \Delta P_{ext}$$

où $\Delta F$ est la variation de l'effort longitudinal ;

$\Delta P_{ext}$ est la variation de la pression externe déterminée ;

E est le module d'Young du matériau dans lequel la portion du tuyau est réalisée ; et

$\Delta\varepsilon_{mec,mes}$ est la variation de la composante mécanique de la déformation mesurée ;

▪ pour au moins une zone de mesure, la première pression est la pression interne et la deuxième pression est la pression externe, la variation de la pression externe étant calculée, lors de l'étape (a), selon :

$$\Delta P_{ext}=-\frac{r^2 E\left(r_{0,ext}^2-r_{0,int}^2\right)}{r_{0,ext}^2\left[r_{0,int}^2+(1-2v)r^2\right]}\Delta\varepsilon_{mec,mes}+\frac{r_{0,int}^2\left[r_{0,ext}^2+(1-2v)r^2\right]}{r_{0,ext}^2\left[r_{0,int}^2+(1-2v)r^2\right]}\Delta P_{int}$$

où $\Delta P_{ext}$ est la variation de la pression externe ;
$\Delta P_{int}$ est la variation de la pression interne déterminée ;
E est le module d'Young du matériau dans lequel la portion du tuyau est réalisée ; et
$\Delta\varepsilon_{mec,mes}$ est la variation de la composante mécanique de la déformation mesurée ;

■ pour au moins une zone de mesure, la première pression est la pression interne, la variation de l'effort longitudinal étant calculée, lors de l'étape (b), selon :

$$\Delta F=\frac{\pi E\left(r_{0,ext}^2-r_{0,int}^2\right)\left(r^2+r_{0,int}^2\right)}{r_{0,int}^2+(1-2v)r^2}\Delta\varepsilon_{mec,mes}-\frac{2\pi v r_{0,int}^2\left(r_{0,ext}^2-r_{0,int}^2\right)}{r_{0,int}^2+(1-2v)r^2}\Delta P_{int}$$

où $\Delta F$ est la variation de l'effort longitudinal ;
$\Delta P_{int}$ est la variation de la pression interne déterminée ;
E est le module d'Young du matériau dans lequel la portion du tuyau est réalisée ; et
$\Delta\varepsilon_{mec,mes}$ est la variation de la composante mécanique de la déformation mesurée

■ pour au moins une zone de mesure, la mesure de la variation de la composante mécanique de déformation correspondante comprend la mise en œuvre d'une fibre optique fixée à ladite zone de mesure, la fibre optique s'étendant suivant la direction de mesure correspondante, de façon à former un capteur réparti de Brillouin et de Rayleigh ;
• N zones de mesure sont circonférentiellement réparties tous les $2\pi/N$ autour de l'axe central, N étant un entier strictement supérieur à 1.

En outre, l'invention a pour objet un dispositif de mesure pour mesurer une pression et/ou une force longitudinale s'appliquant à un tuyau, le tuyau comportant une portion présentant une forme cylindrique et s'étendant le long d'un axe central, le dispositif de mesure comprenant un organe de mesure de déformation et un calculateur,

l'organe de mesure de déformation étant configuré pour mesurer une variation d'une composante mécanique d'une déformation locale d'au moins une zone de mesure de la portion du tuyau suivant une direction de mesure associée, la composante mécanique étant la composante de la déformation qui est indépendante de la déformation thermique du tuyau,
le calculateur étant configuré pour calculer :

a) une variation d'une deuxième pression, parmi une pression interne du tuyau et une pression externe s'appliquant sur le tuyau depuis l'extérieur, uniquement à partir de la variation de la composante mécanique de la déformation mesurée et d'une variation concomitante d'une première pression, distincte de la deuxième pression, la direction de mesure définissant, avec un plan normal à l'axe central, un angle de mesure $\phi_{\Delta P}$ égal à :

$$\phi_{\Delta P}=\pm\arctan\left(\sqrt{v}\right)\bmod\pi$$

et/ou
b) une variation d'un effort longitudinal exercé sur le tuyau uniquement à partir de la variation de la composante mécanique de la déformation mesurée et de la variation de la première pression, la direction de mesure définissant, avec le plan normal à l'axe central, un angle de mesure $\phi_{\Delta F}$ égal à :

$$\phi_{\Delta F}=\pm\arctan\left(\sqrt{\frac{(1+v)\rho_0^2+(1-v)r^2}{2vr^2}}\right)\bmod\pi$$

où « arctan » est la fonction arc-tangente ;

r est une distance de la zone de mesure par rapport à l'axe central ;

$p_0$ est une grandeur égale à un rayon externe $r_{0,ext}$ de la portion du tuyau à un instant de référence prédéterminé, si la première pression est la pression externe, et à un rayon interne $r_{0,int}$ de la portion du tuyau à l'instant de référence prédéterminé, si la première pression est la pression interne ; et

v est le coefficient de Poisson du matériau dans lequel est réalisée la portion du tuyau.

L'invention a également pour objet un ensemble comprenant un tuyau et un dispositif de mesure selon l'invention, le tuyau comportant une portion s'étendant le long d'un axe longitudinal et présentant une forme de cylindre de révolution, l'organe de mesure de déformation étant configuré pour mesurer une puissance et une fréquence d'une raie Brillouin d'un rayonnement rétrodiffusé pour déterminer une variation d'une composante mécanique d'une déformation locale de ladite zone de mesure suivant une direction de mesure respective, la direction de mesure définissant, avec un plan normal à l'axe central, un angle dont la valeur vaut :

$$\phi_{\Delta P} = \pm \arctan\left(\sqrt{v}\right) \bmod \pi$$

ou

$$\phi_{\Delta F} = \pm \arctan\left(\sqrt{\frac{(1+v)\rho_0^2 + (1-v)r^2}{2vr^2}}\right) \bmod \pi$$

## BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :

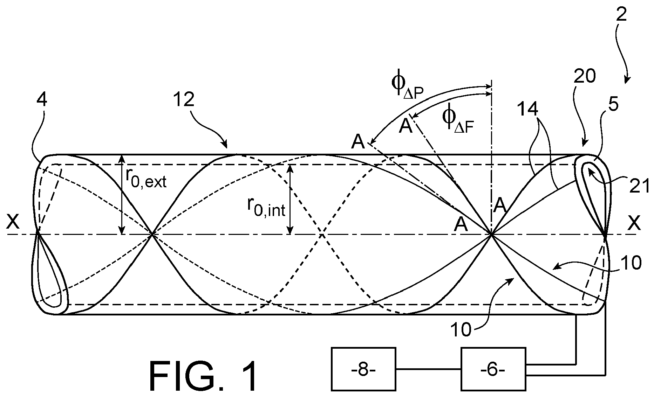

-     la figure 1 est une représentation schématique d'une installation comprenant un tuyau associé à un dispositif de mesure selon l'invention.

## DESCRIPTION DÉTAILLÉE

Un dispositif de mesure 2 selon l'invention est illustré par la figure 1. Le dispositif de mesure 2 est destiné à la mesure d'une variation $\Delta P_{int}$ d'une pression interne $P_{int}$ d'un tuyau 4, c'est-à-dire à la mesure de la variation de la pression d'un fluide présent dans ledit tuyau 4. La pression du fluide présent dans ledit tuyau 4 est également appelée « pression hydrostatique ». Alternativement, ou en complément, le dispositif de mesure 2 est destiné à la mesure d'une variation $\Delta P_{ext}$ d'une pression externe $P_{ext}$ s'exerçant sur le tuyau 4 depuis l'extérieur, et/ou une variation $\Delta F$ d'un effort longitudinal appliqué au tuyau 4.

Un tel tuyau 4 comporte une paroi 5 de section transversale à contour fermé, définissant une surface externe 20 et une surface interne 21 du tuyau 4, dont une portion 12 présente une forme cylindrique et s'étend le long d'un axe central X-X.

À un instant de référence prédéterminé, la surface externe 20 de la portion 12 se trouve à une distance $r_{0,ext}$ de l'axe central X-X, et la surface interne 21 de la portion 12 à une distance $r_{0,int}$, de l'axe central X-X. Les distances $r_{0,ext}$ et $r_{0,int}$ sont respectivement appelées « rayon externe » et « rayon interne ».

Le dispositif de mesure 2 comprend au moins un organe de mesure de déformation 6 et un calculateur 8.

On notera que par organe de mesure de déformation, on entend ici et dans le reste de l'invention un organe de mesure, tel qu'un capteur ou un système d'interrogation d'un tel capteur, adapté pour mesurer une déformation en tant que telle, ou encore pour mesurer une variation de distance, la déformation longitudinale correspondante étant alors au premier ordre égale à la variation relative de cette distance par rapport à la distance initiale.

L'organe de mesure de déformation 6 est associé à au moins une zone de mesure 10 de la portion 12 du tuyau 4. Une telle zone de mesure 10 est une partie de la surface externe 20 du tuyau 4, de sa surface interne 21, ou est située dans l'épaisseur de sa paroi 5.

En outre, pour chaque zone de mesure 10, l'organe de mesure de déformation 6 est configuré pour mesurer une variation d'une composante mécanique d'une déformation locale de ladite zone de mesure 10 suivant une direction de mesure A-A correspondante. Cette composante mécanique constitue la composante de la déformation qui est indépendante de la déformation thermique du tuyau 4.

Dans ce cas, il est avantageux que N zones de mesure 10 (N étant un entier strictement supérieur à 1) soient circonférentiellement réparties tous les $2\pi/N$ autour de l'axe central X-X. De cette façon, les effets de la flexion de la portion 12 du tuyau 4 sont susceptibles d'être compensés.

Dans le cas où le dispositif de mesure 2 est destiné à mesurer une variation de pression, l'organe de mesure de déformation 6 est agencé de sorte que, pour chaque zone de mesure 10, la direction de mesure A-A correspondante définisse, avec un plan normal à l'axe central X-X, un angle de mesure $\phi_{\Delta P}$ dont la valeur vaut :

$$\phi_{\Delta P}=\pm\arctan\left(\sqrt{\nu}\right) \bmod \pi$$

où « arctan » est la fonction arc-tangente ; et
$\nu$ est le coefficient de Poisson du matériau dans lequel est réalisée la portion du tuyau.

Alternativement, ou de façon complémentaire, dans le cas où le dispositif de mesure 2 est destiné à une mesure de variations d'effort longitudinal, l'organe de mesure de déformation 6 est agencé de sorte que, pour chaque zone de mesure 10, la direction de mesure correspondante A-A définisse, avec un plan normal à l'axe central X-X, un angle de mesure $\phi_{\Delta F}$ dont la valeur sera explicitée ultérieurement.

En particulier, l'organe de mesure de déformation 6 comprend une fibre optique, en particulier une fibre optique 14 fixée à la portion 12 du tuyau 4, enroulée en une hélice, dont l'axe est l'axe central X-X, comme illustré par la figure 1.

Dans ce cas, l'organe de mesure de déformation 6 est tel que la mesure de déformation est une mesure répartie sur la longueur la fibre optique 14, chaque zone de mesure 10 étant un point de contact entre la portion 12 et la fibre optique 14. D'une manière avantageuse, la fibre optique 14 peut former un capteur réparti de Brillouin et de Rayleigh.

Bien entendu, un tel exemple d'organe de mesure n'est fourni qu'à titre d'exemple avantageux, d'autres types d'organe de mesure, tels que des jauges de déformation auto-compensées en température sont susceptibles d'être mises en œuvre dans le cadre de la présente invention.

En outre, pour chacun desdits points de contact, une direction de propagation locale de la lumière dans la fibre optique forme la direction de mesure A-A, l'angle entre la direction de propagation locale, audit point de contact, et le plan normal à l'axe central A-A étant égal à l'angle de mesure défini précédemment.

Dans ce cas, l'organe de mesure de déformation 6 est, avantageusement, configuré pour mettre en œuvre une mesure répartie de type Brillouin et Rayleigh faisant intervenir le ratio de Landau-Placzek pour déterminer la variation de la composante mécanique de la déformation. Une telle mesure répartie de type Brillouin et Rayleigh faisant intervenir le ratio de Landau-Placzek est particulièrement avantageuse puisqu'elle permet de s'affranchir, par normalisation avec la puissance de la raie Rayleigh, des variations de puissance du signal Brillouin dues aux pertes le long de la fibre optique.

Plus précisément, l'organe de mesure de déformation 6 comprend une source optique pour générer un rayonnement électromagnétique destiné à être injecté dans la fibre optique 14, et un analyseur pour déterminer des caractéristiques spectrales d'un rayonnement rétrodiffusé par la fibre optique 14. De telles caractéristiques spectrales comprennent, en particulier, une puissance et une fréquence d'une raie Brillouin du rayonnement rétrodiffusé. En outre, l'organe de mesure de déformation 6 est configuré pour déterminer la variation de la composante mécanique de déformation à partir des variations desdites puissance et fréquence.

Ceci résulte du fait que les variations de la puissance et de la fréquence de la raie Brillouin sont liées, au premier ordre, aux variations de température et de composante mécanique de déformation par une relation linéaire. Par conséquent, la mesure de la puissance et de la fréquence de la raie Brillouin autorise, par une simple inversion d'une matrice d'ordre 2, l'obtention de la variation de la composante mécanique de la déformation, ainsi qu'une variation de température associée, indépendamment l'une de l'autre.

Le calculateur 8 est relié en sortie de l'organe de mesure de déformation 6 pour recevoir la variation de la composante mécanique de déformation qui a été mesurée.

En outre, dans le cas où, pour au moins une zone de mesure 10, la direction de mesure A-A correspondante forme, avec un plan orthogonal à l'axe central X-X, un angle égal à $\phi_{\Delta P}$, le calculateur 8 est configuré pour calculer la variation $\Delta P_{int}$ de la pression interne $P_{int}$ selon :

$$\Delta P_{int}=\frac{r^2 E\left(r_{0,ext}^2-r_{0,int}^2\right)}{r_{0,int}^2\left[r_{0,ext}^2+(1-2\nu)r^2\right]}\Delta\varepsilon_{mec,mes}+\frac{r_{0,ext}^2\left[r_{0,int}^2+(1-2\nu)r^2\right]}{r_{0,int}^2\left[r_{0,ext}^2+(1-2\nu)r^2\right]}\Delta P_{ext}$$

où $\Delta\varepsilon_{mec,mes}$ est la variation de la composante mécanique de la déformation mesurée par l'organe de mesure de déformation 6 ;

$\Delta P_{ext}$ est une variation concomitante de la pression externe, par exemple déterminée au moyen d'un capteur de pression externe (non représenté) du dispositif de mesure 2 ;

r est une distance de la zone de mesure 10 par rapport à l'axe central X-X ; et
E est le module d'Young du matériau dans lequel la portion du tuyau est réalisée.

Une telle mesure est complètement décorrélée des variations d'effort longitudinal s'exerçant sur le tuyau 4. Ceci est une conséquence directe du choix de l'angle de mesure $\phi_{\Delta P}$ remarquable pour la mesure des variations de pression (interne ou externe). En effet, lorsque la direction de mesure A-A forme, avec un plan orthogonal à l'axe central X-X, un angle égal à $\phi_{\Delta P}$, les variations de la composante mécanique de déformation ne dépendent pas des variations d'effort longitudinal, mais seulement des variations de pression (interne ou externe) appliquées au tuyau 4.

Avantageusement, le calculateur 8 est configuré pour stocker une valeur $P_{int,0}$ de la pression interne à l'instant de référence prédéterminé. Dans ce cas, le calculateur 8 est également configuré pour calculer la pression interne $P_{int}$ à un instant final quelconque ultérieur à l'instant initial par intégration, dans le temps, de la variation de la pression interne $\Delta P_{int}$ entre l'instant de référence et l'instant final.

Alternativement, ou en complément, dans le cas où, pour au moins une zone de mesure 10, la direction de mesure A-A correspondante forme, avec le plan orthogonal à l'axe central X-X, un angle égal à $\phi_{\Delta P}$, le calculateur 8 est configuré pour calculer la variation $\Delta P_{ext}$ de la pression externe $P_{ext}$ selon :

$$\Delta P_{ext}=-\frac{r^2 E\left(r_{0,ext}^2-r_{0,int}^2\right)}{r_{0,ext}^2\left[r_{0,int}^2+(1-2v)r^2\right]}\Delta\varepsilon_{mec,mes}+\frac{r_{0,int}^2\left[r_{0,ext}^2+(1-2v)r^2\right]}{r_{0,ext}^2\left[r_{0,int}^2+(1-2v)r^2\right]}\Delta P_{int}$$

où $\Delta\varepsilon_{mec,mes}$ est la variation de la composante mécanique de la déformation mesurée ; et
$\Delta P_{int}$ est une variation concomitante de la pression interne, par exemple déterminée au moyen d'un capteur de pression interne (non représenté) du dispositif de mesure 2.

Une telle mesure est également décorrélée des variations d'effort longitudinal s'exerçant sur le tuyau 4, du fait du choix de l'angle de mesure $\phi_{\Delta P}$, et ceci pour les mêmes raisons que précédemment.

Avantageusement, le calculateur 8 est configuré pour stocker une valeur $P_{ext,0}$ de la pression externe à l'instant de référence prédéterminé. Dans ce cas, le calculateur 8 est également configuré pour calculer la pression externe $P_{ext}$ à un instant final quelconque ultérieur à l'instant initial par intégration, dans le temps, de la variation de la pression externe $\Delta P_{ext}$ entre l'instant de référence et l'instant final.

Alternativement, ou en complément, le calculateur 8 est configuré pour calculer la variation $\Delta F$ de l'effort longitudinal selon :

$$\Delta F=\frac{\pi E\left(r_{0,ext}^2-r_{0,int}^2\right)\left(r^2+r_{0,ext}^2\right)}{r_{0,ext}^2+(1-2v)r^2}\Delta\varepsilon_{mec,mes}-\frac{2\pi v r_{0,ext}^2\left(r_{0,ext}^2-r_{0,int}^2\right)}{r_{0,ext}^2+(1-2v)r^2}\Delta P_{ext}$$

où $\Delta\varepsilon_{mec,mes}$ est la variation de la composante mécanique de la déformation mesurée ; et
$\Delta P_{ext}$ est une variation concomitante de la pression externe, par exemple déterminée au moyen du capteur de pression externe (non représenté) du dispositif de mesure 2.

Dans ce cas, la valeur de l'angle de mesure $\phi_{\Delta F}$ est choisie égale à :

$$\phi_{\Delta F}=\pm\arctan\left(\sqrt{\frac{(1+v)r_{0,ext}^2+(1-v)r^2}{2vr^2}}\right)\bmod\pi$$

Alternativement, ou en complément, le calculateur 8 est configuré pour calculer la variation $\Delta F$ de l'effort longitudinal selon :

$$\Delta F=\frac{\pi E\left(r_{0,ext}^2-r_{0,int}^2\right)\left(r^2+r_{0,int}^2\right)}{r_{0,int}^2+(1-2v)r^2}\Delta\varepsilon_{mec,mes}-\frac{2\pi v r_{0,int}^2\left(r_{0,ext}^2-r_{0,int}^2\right)}{r_{0,int}^2+(1-2v)r^2}\Delta P_{int}$$

où $\Delta\varepsilon_{mec,mes}$ est la variation de la composante mécanique de la déformation mesurée ; et

$\Delta P_{int}$ est une variation concomitante de la pression interne, par exemple déterminée au moyen du capteur de pression interne (non représenté) du dispositif de mesure 2.

Dans ce cas, la valeur de l'angle de mesure $\phi_{\Delta F}$ est choisie égale à :

$$\phi_{\Delta F}=\pm\arctan\left(\sqrt{\frac{(1+v)r_{0,int}^2+(1-v)r^2}{2vr^2}}\right)\bmod \pi$$

D'une façon plus générale, l'angle de mesure $\phi_{\Delta F}$ s'exprime comme :

$$\phi_{\Delta F}=\pm\arctan\left(\sqrt{\frac{(1+v)\rho_0^2+(1-v)r^2}{2vr^2}}\right)\bmod \pi$$

où $p_0$ est une grandeur égale :

- au rayon externe $r_{0,ext}$ de la portion 12 du tuyau 4 si le calculateur 8 est configuré pour calculer la variation de l'effort longitudinal à partir de la variation $\Delta P_{ext}$ de la pression externe $P_{ext}$ ; ou
- au rayon interne $r_{0,int}$ de la portion 12 du tuyau 4 si le calculateur 8 est configuré pour calculer la variation de l'effort longitudinal à partir de la variation la variation $\Delta P_{int}$ de la pression interne $P_{int}$.

Dans chaque cas, la mesure de la variation de l'effort longitudinal, par le choix judicieux de l'angle de mesure, est décorrélée des variations de pression.

Avantageusement, dans chaque cas, le calculateur 8 est configuré pour stocker une valeur $F_0$ de l'effort longitudinal appliqué sur le tuyau 4 à l'instant de référence prédéterminé. Dans ce cas, le calculateur 8 est également configuré pour calculer l'effort longitudinal F à un instant final quelconque ultérieur à l'instant initial par intégration, dans le temps, de la variation $\Delta F$ de l'effort longitudinal entre l'instant de référence et l'instant final.

Le fonctionnement du dispositif de mesure 2 va maintenant être décrit.

D'abord, l'organe de mesure de déformation 6 est agencé de façon à mesurer, pour chaque zone de mesure 10 de la portion 12 du tuyau 4, la variation de la composante mécanique d'une déformation suivant une direction de mesure correspondante.

La direction de mesure définit, avec un plan orthogonal à l'axe central X-X, un angle de mesure dont la valeur vaut $\phi_{\Delta P}$ ou $\phi_{\Delta F}$, selon la grandeur dont les variations sont à déterminer.

Le calculateur 8 reçoit, en provenance de l'organe de mesure de déformation 6, la variation de la déformation mécanique $\Delta\varepsilon_{mec,mes}$ mesurée.

En outre, le calculateur 8 reçoit une mesure concomitante d'une variation d'une première pression, parmi la pression interne et la pression externe, et calcule, uniquement à partir de la variation de la composante mécanique de la déformation mesurée et de la variation de la première pression :

- une variation d'une deuxième pression parmi la pression interne et la pression externe, distincte de la première pression ; et/ou
- une variation d'un effort longitudinal exercé sur le tuyau 4.

**Revendications**

1. Procédé de mesure comprenant, pour au moins une zone de mesure d'une portion d'un tuyau, la portion du tuyau présentant une forme cylindrique et s'étendant le long d'un axe central, les étapes :

   - mesure d'une puissance et d'une fréquence d'une raie Brillouin d'un rayonnement rétrodiffusé pour déterminer une variation d'une composante mécanique, suivant une direction de mesure associée à ladite zone de mesure, d'une déformation locale correspondante du tuyau, la composante mécanique étant la composante de la déformation qui est indépendante de la déformation thermique du tuyau ;
   - détermination d'une variation d'une première pression, parmi une pression interne du tuyau et une pression externe s'appliquant sur le tuyau depuis l'extérieur ; et
- calcul :

a) d'une variation d'une deuxième pression parmi la pression interne et la pression externe, distincte de la première pression, uniquement à partir de la variation de la composante mécanique de la déformation mesurée et de la variation de la première pression déterminée, la direction de mesure définissant, avec un plan normal à l'axe central, un angle de mesure $\phi_{\Delta P}$ égal à :

[Math 1]

$$\phi_{\Delta P} = \pm\arctan\left(\sqrt{v}\right) \bmod \pi$$

et/ou

b) d'une variation d'un effort longitudinal exercé sur le tuyau uniquement à partir de la variation de la composante mécanique de la déformation mesurée et de la variation de la première pression déterminée, la direction de mesure définissant, avec le plan normal à l'axe central, un angle de mesure $\phi_{\Delta F}$ égal à :

[Math 2]

$$\phi_{\Delta F} = \pm\arctan\left(\sqrt{\frac{(1+v)\rho_0^2 + (1-v)r^2}{2vr^2}}\right) \bmod \pi$$

où « arctan » est la fonction arc-tangente ;
r est une distance de la zone de mesure par rapport à l'axe central ;
$p_0$ est une grandeur égale à un rayon externe $r_{0,ext}$ de la portion du tuyau à un instant de référence prédéterminé, si la première pression est la pression externe, et à un rayon interne $r_{0,int}$ de la portion du tuyau à l'instant de référence prédéterminé, si la première pression est la pression interne ; et
v est le coefficient de Poisson du matériau dans lequel est réalisée la portion d'un tuyau.

2. Procédé de mesure selon la revendication 1, dans lequel, pour au moins une zone de mesure, la première pression est la pression externe et la deuxième pression est la pression interne, la variation de la pression interne étant calculée, lors de l'étape (a), selon :

[Math 3]

$$\Delta P_{int} = \frac{r^2 E\left(r_{0,ext}^2 - r_{0,int}^2\right)}{r_{0,int}^2\left[r_{0,ext}^2 + (1-2v)r^2\right]} \Delta\varepsilon_{mec,mes} + \frac{r_{0,ext}^2\left[r_{0,int}^2 + (1-2v)r^2\right]}{r_{0,int}^2\left[r_{0,ext}^2 + (1-2v)r^2\right]} \Delta P_{ext}$$

où $\Delta P_{int}$ est la variation de la pression interne ;
$\Delta P_{ext}$ est la variation de la pression externe déterminée ;
E est le module d'Young du matériau dans lequel la portion du tuyau est réalisée ; et
$\Delta\varepsilon_{mec,mes}$ est la variation de la composante mécanique de la déformation mesurée.

3. Procédé de mesure selon la revendication 1 ou 2, dans lequel, pour au moins une zone de mesure, la première pression est la pression externe, la variation de l'effort longitudinal étant calculée, lors de l'étape (b), selon :

[Math 4]

$$\Delta F = \frac{\pi E\left(r_{0,ext}^2 - r_{0,int}^2\right)\left(r^2 + r_{0,ext}^2\right)}{r_{0,ext}^2 + (1-2v)r^2} \Delta\varepsilon_{mec,mes} - \frac{2\pi v r_{0,ext}^2\left(r_{0,ext}^2 - r_{0,int}^2\right)}{r_{0,ext}^2 + (1-2v)r^2} \Delta P_{ext}$$

où $\Delta F$ est la variation de l'effort longitudinal ;

$\Delta P_{ext}$ est la variation de la pression externe déterminée ;
E est le module d'Young du matériau dans lequel la portion du tuyau est réalisée ; et
$\Delta\varepsilon_{mec,mes}$ est la variation de la composante mécanique de la déformation mesurée.

4. Procédé de mesure selon l'une quelconque des revendications 1 à 3, dans lequel, pour au moins une zone de mesure, la première pression est la pression interne et la deuxième pression est la pression externe, la variation de la pression externe étant calculée, lors de l'étape (a), selon :

[Math 5]

$$\Delta P_{ext}=-\frac{r^2E\left(r_{0,ext}^2-r_{0,int}^2\right)}{r_{0,ext}^2\left[r_{0,int}^2+(1-2v)r^2\right]}\Delta\varepsilon_{mec,mes}+\frac{r_{0,int}^2\left[r_{0,ext}^2+(1-2v)r^2\right]}{r_{0,ext}^2\left[r_{0,int}^2+(1-2v)r^2\right]}\Delta P_{int}$$

où $\Delta P_{ext}$ est la variation de la pression externe ;
$\Delta P_{int}$ est la variation de la pression interne déterminée ;
E est le module d'Young du matériau dans lequel la portion du tuyau est réalisée ; et
$\Delta\varepsilon_{mec,mes}$ est la variation de la composante mécanique de la déformation mesurée.

5. Procédé de mesure selon l'une quelconque des revendications 1 à 4, dans lequel, pour au moins une zone de mesure, la première pression est la pression interne, la variation de l'effort longitudinal étant calculée, lors de l'étape (b), selon :

[Math 6]

$$\Delta F=\frac{\pi E\left(r_{0,ext}^2-r_{0,int}^2\right)\left(r^2+r_{0,int}^2\right)}{r_{0,int}^2+(1-2v)r^2}\Delta\varepsilon_{mec,mes}-\frac{2\pi v r_{0,int}^2\left(r_{0,ext}^2-r_{0,int}^2\right)}{r_{0,int}^2+(1-2v)r^2}\Delta P_{int}$$

où $\Delta F$ est la variation de l'effort longitudinal ;
$\Delta P_{int}$ est la variation de la pression interne déterminée ;
E est le module d'Young du matériau dans lequel la portion du tuyau est réalisée ; et
$\Delta\varepsilon_{mec,mes}$ est la variation de la composante mécanique de la déformation mesurée.

6. Procédé de mesure selon l'une quelconque des revendications 1 à 5, dans lequel, pour au moins une zone de mesure, la mesure de la variation de la composante mécanique de déformation correspondante comprend la mise en œuvre d'une fibre optique fixée à ladite zone de mesure, la fibre optique s'étendant suivant la direction de mesure correspondante, de façon à former un capteur réparti de Brillouin et de Rayleigh.

7. Procédé de mesure selon l'une quelconque des revendications 1 à 6, dans lequel N zones de mesure sont circonférentiellement réparties tous les $2\pi/N$ autour de l'axe central, N étant un entier strictement supérieur à 1.

8. Dispositif de mesure pour mesurer une pression et/ou une force longitudinale s'appliquant à un tuyau, le tuyau comportant une portion présentant une forme cylindrique et s'étendant le long d'un axe central, le dispositif de mesure comprenant un organe de mesure de déformation et un calculateur,

l'organe de mesure de déformation étant configuré pour mesurer une puissance et une fréquence d'une raie Brillouin d'un rayonnement rétrodiffusé pour déterminer une variation d'une composante mécanique d'une déformation locale d'au moins une zone de mesure de la portion du tuyau suivant une direction de mesure associée, la composante mécanique étant la composante de la déformation qui est indépendante de la déformation thermique du tuyau,
le calculateur étant configuré pour calculer :

a) une variation d'une deuxième pression, parmi une pression interne du tuyau et une pression externe s'appliquant sur le tuyau depuis l'extérieur, uniquement à partir de la variation de la composante mécanique de la déformation mesurée et d'une variation d'une première pression, distincte de la deuxième pression, la direction de mesure définissant, avec un plan normal à l'axe central, un angle de mesure $\varphi_{\Delta P}$ égal à :

[Math 1]

$$\phi_{\Delta P} = \pm \arctan\left(\sqrt{v}\right) \bmod \pi$$

et/ou

b) une variation d'un effort longitudinal exercé sur le tuyau uniquement à partir de la variation de la composante mécanique de la déformation mesurée et de la variation de la première pression, la direction de mesure définissant, avec le plan normal à l'axe central, un angle de mesure $\phi_{\Delta F}$ égal à :

[Math 2]

$$\phi_{\Delta F} = \pm \arctan\left(\sqrt{\frac{(1+v)\rho_0^2 + (1-v)r^2}{2vr^2}}\right) \bmod \pi$$

où « arctan » est la fonction arc-tangente ;

r est une distance de la zone de mesure par rapport à l'axe central ;

$p_0$ est une grandeur égale à un rayon externe $r_{0,ext}$ de la portion du tuyau à un instant de référence prédéterminé, si la première pression est la pression externe, et à un rayon interne $r_{0,int}$ de la portion du tuyau à l'instant de référence prédéterminé, si la première pression est la pression interne ; et

v est le coefficient de Poisson du matériau dans lequel est réalisée la portion du tuyau.

**9.** Installation comprenant un tuyau et un dispositif de mesure selon la revendication 8, le tuyau comportant une portion s'étendant le long d'un axe longitudinal et présentant une forme de cylindre de révolution,

l'organe de mesure de déformation étant agencé de façon à mesurer une variation d'une composante mécanique d'une déformation locale de ladite zone de mesure suivant une direction de mesure respective, la direction de mesure définissant, avec un plan normal à l'axe central, un angle dont la valeur vaut :

[Math 1]

$$\phi_{\Delta P} = \pm \arctan\left(\sqrt{v}\right) \bmod \pi$$

ou

[Math 2]

$$\phi_{\Delta F} = \pm \arctan\left(\sqrt{\frac{(1+v)\rho_0^2 + (1-v)r^2}{2vr^2}}\right) \bmod \pi$$

**Patentansprüche**

**1.** Messverfahren, das für mindestens einen Messbereich eines Abschnitts eines Rohrs, wobei der Abschnitt des Rohrs eine zylindrische Form aufweist und sich entlang einer Mittelachse erstreckt, die folgenden Schritte umfasst:

- Messen einer Leistung und einer Frequenz einer Brillouin-Linie einer zurückgestreuten Strahlung, um eine Änderung einer mechanischen Komponente, entlang einer mit dem Messbereich verbundenen Messrichtung, einer entsprechenden lokalen Verformung des Rohrs zu bestimmen, wobei die mechanische Komponente die Komponente der Verformung ist, die unabhängig von der thermischen Verformung des Rohrs ist;

- Bestimmen einer Änderung eines ersten Drucks aus einem Innendruck des Rohrs und einem Außendruck, der von außen auf das Rohr einwirkt; und

- Berechnen:

a) einer Änderung eines zweiten Drucks aus dem Innendruck und dem Außendruck, der sich vom ersten Druck unterscheidet, nur ausgehend von der Änderung der gemessenen mechanischen Komponente der Verformung und der Änderung des bestimmten ersten Drucks, wobei die Messrichtung mit einer Ebene senkrecht zur Mittelachse einen Messwinkel $\phi_{\Delta P}$ definiert, der gleich ist wie:

[Math 1]

$$\phi_{\Delta P} = \pm \arctan\left(\sqrt{v}\right) \bmod \pi$$

und/oder

b) einer Änderung einer auf das Rohr ausgeübten Längskraft nur ausgehend von der Änderung der gemessenen mechanischen Komponente der Verformung und der Änderung des bestimmten ersten Drucks, wobei die Messrichtung mit der Ebene senkrecht zur Mittelachse einen Messwinkel $\phi_{\Delta F}$ definiert, der gleich ist wie:

[Math 2]

$$\phi_{\Delta P} = \pm \arctan\left(\sqrt{\frac{(1+v)\rho_0^2 + (1-v)r^2}{2vr^2}}\right) \bmod \pi$$

wobei "arctan" die Arcustangensfunktion ist;
r ein Abstand des Messbereichs im Verhältnis zur Mittelachse ist;
$\rho_0$ eine Größe ist, die einem äußeren Radius $r_{0,ext}$ des Abschnitts des Rohrs zu einem vorbestimmten Bezugszeitpunkt entspricht, wenn der erste Druck der Außendruck ist, und einem inneren Radius $r_{0,int}$ des Abschnitts des Rohrs zu einem vorbestimmten Bezugszeitpunkt entspricht, wenn der erste Druck der Innendruck ist; und
v der Poissonkoeffizient des Materials ist, aus dem der Abschnitt eines Rohrs hergestellt ist.

2. Messverfahren nach Anspruch 1, wobei für mindestens einen Messbereich der erste Druck der Außendruck ist und der zweite Druck der Innendruck ist, wobei die Änderung des Innendrucks in Schritt (a) gemäß Folgendem berechnet wird:

[Math 3]

$$\Delta P_{int} = \frac{r^2 E\left(r_{0,ext}^2 - r_{0,int}^2\right)}{r_{0,int}^2\left[r_{0,ext}^2 + (1-2v)r^2\right]} \Delta\varepsilon_{mec,mes} + \frac{r_{0,ext}^2\left[r_{0,int}^2 + (1-2v)r^2\right]}{r_{0,int}^2\left[r_{0,ext}^2 + (1-2v)r^2\right]} \Delta P_{ext}$$

wobei $\Delta P_{int}$ die Änderung des Innendrucks ist;
$\Delta P_{ext}$ die Änderung des bestimmten Außendrucks ist;
E der Young-Modul des Materials ist, aus dem der Abschnitt des Rohrs hergestellt ist; und
$\Delta\varepsilon_{mec,mes}$ die Änderung der gemessenen mechanischen Komponente der Verformung ist.

3. Messverfahren nach Anspruch 1 oder 2, wobei für mindestens einen Messbereich der erste Druck der Außendruck ist, wobei die Änderung der Längskraft in Schritt (b) gemäß Folgendem berechnet wird:

[Math 4]

$$\Delta F = \frac{\pi E\left(r_{0,ext}^2 - r_{0,int}^2\right)\left(r^2 + r_{0,ext}^2\right)}{r_{0,ext}^2 + (1-2v)r^2} \Delta\varepsilon_{mec,mes} - \frac{2\pi v r_{0,ext}^2\left(r_{0,ext}^2 - r_{0,int}^2\right)}{r_{0,ext}^2 + (1-2v)r^2} \Delta P_{ext}$$

wobei ΔF die Änderung der Längskraft ist;
$\Delta P_{ext}$ die Änderung des bestimmten Außendrucks ist;
E der Young-Modul des Materials ist, aus dem der Abschnitt des Rohrs hergestellt ist; und
$\Delta\varepsilon_{mec,mes}$ die Änderung der gemessenen mechanischen Komponente der Verformung ist.

**4.** Messverfahren nach einem der Ansprüche 1 bis 3, wobei für mindestens einen Messbereich der erste Druck der Innendruck ist und der zweite Druck der Außendruck ist, wobei die Änderung des Außendrucks in Schritt (a) gemäß Folgendem berechnet wird:

[Math 5]

$$\Delta P_{ext} = -\frac{r^2 E\left(r_{0,ext}^2 - r_{0,int}^2\right)}{r_{0,ext}^2\left[r_{0,int}^2 + (1-2v)r^2\right]}\Delta\varepsilon_{mec,mes} + \frac{r_{0,int}^2\left[r_{0,ext}^2 + (1-2v)r^2\right]}{r_{0,ext}^2\left[r_{0,int}^2 + (1-2v)r^2\right]}\Delta P_{int}$$

wobei $\Delta P_{ext}$ die Änderung des Außendrucks ist;
$\Delta P_{int}$ die Änderung des bestimmten Innendrucks ist;
E der Young-Modul des Materials ist, aus dem der Abschnitt des Rohrs hergestellt ist; und
$\Delta\varepsilon_{mec,mes}$ die Änderung der gemessenen mechanischen Komponente der Verformung ist.

**5.** Messverfahren nach einem der Ansprüche 1 bis 4, wobei für mindestens einen Messbereich der erste Druck der Innendruck ist, wobei die Änderung der Längskraft in Schritt (b) gemäß Folgendem berechnet wird:

[Math 6]

$$\Delta F = \frac{\pi E(r_{0,ext}^2 - r_{0,int}^2)(r^2 + r_{0,int}^2)}{r_{0,int}^2 + (1-2v)r^2}\Delta\varepsilon_{mec,mes} - \frac{2\pi v r_{0,int}^2(r_{0,ext}^2 - r_{0,int}^2)}{r_{0,int}^2 + (1-2v)r^2}\Delta P_{int}$$

wobei ΔF die Änderung der Längskraft ist;
$\Delta P_{int}$ die Änderung des bestimmten Innendrucks ist;
E der Young-Modul des Materials ist, aus dem der Abschnitt des Rohrs hergestellt ist; und
$\Delta\varepsilon_{mec,mes}$ die Änderung der gemessenen mechanischen Komponente der Verformung ist.

**6.** Messverfahren nach einem der Ansprüche 1 bis 5, wobei für mindestens einen Messbereich das Messen der Änderung der entsprechenden mechanischen Komponente der Verformung den Einsatz eines an dem Messbereich befestigten Lichtleiters umfasst, wobei sich der Lichtleiter entlang der entsprechenden Messrichtung erstreckt, um einen verteilten Brillouin- und Rayleigh-Sensor zu bilden.

**7.** Messverfahren nach einem der Ansprüche 1 bis 6, wobei N Messbereiche in Umfangsrichtung alle 2π/N um die Mittelachse verteilt sind, wobei N eine ganze Zahl ist, die strikt größer als 1 ist.

**8.** Messvorrichtung zum Messen eines Drucks und/oder einer Längskraft, der bzw. die auf ein Rohr einwirkt, wobei das Rohr einen Abschnitt mit einer zylindrischen Form aufweist und sich entlang einer Mittelachse erstreckt, wobei die Messvorrichtung ein Verformungsmesselement und einen Rechner umfasst,

wobei das Verformungsmesselement so eingerichtet ist, dass es eine Leistung und eine Frequenz einer Brillouin-Linie einer zurückgestreuten Strahlung misst, um eine Änderung einer mechanischen Komponente einer lokalen Verformung von mindestens einem Messbereich des Abschnitts des Rohrs entlang einer zugehörigen Messrichtung zu bestimmen, wobei die mechanische Komponente die Komponente der Verformung ist, die unabhängig von der thermischen Verformung des Rohrs ist,
wobei der Rechner so eingerichtet ist, dass er Folgendes berechnet:

a) eine Änderung eines zweiten Drucks aus einem Innendruck des Rohrs und einem Außendruck, der von außen auf das Rohr einwirkt, nur ausgehend von der Änderung der gemessenen mechanischen Komponente der Verformung und einer Änderung eines ersten Drucks, der sich vom zweiten Druck unterscheidet, wobei die Messrichtung mit einer Ebene senkrecht zur Mittelachse einen Messwinkel $\phi_{\Delta P}$ definiert, der gleich

ist wie:

[Math 1]

$$\phi_{\Delta P} = \pm \arctan(\sqrt{v}) \bmod \pi$$

und/oder

b) eine Änderung einer auf das Rohr ausgeübten Längskraft nur ausgehend von der Änderung der gemessenen mechanischen Komponente der Verformung und der Änderung des ersten Drucks, wobei die Messrichtung mit der Ebene senkrecht zur Mittelachse einen Messwinkel $\phi_{\Delta F}$ definiert, der gleich ist wie:

[Math 2]

$$\phi_{\Delta F} = \pm \arctan\left(\sqrt{\frac{(1+v)\rho_0^2 + (1-v)r^2}{2vr^2}}\right) \bmod \pi$$

wobei "arctan" die Arcustangensfunktion ist;
r ein Abstand des Messbereichs im Verhältnis zur Mittelachse ist;
$\rho_0$ eine Größe ist, die einem äußeren Radius $r_{0,ext}$ des Abschnitts des Rohrs zu einem vorbestimmten Bezugszeitpunkt entspricht, wenn der erste Druck der Außendruck ist, und einem inneren Radius $r_{0,int}$ des Abschnitts des Rohrs zu einem vorbestimmten Bezugszeitpunkt entspricht, wenn der erste Druck der Innendruck ist; und
v der Poissonkoeffizient des Materials ist, aus dem der Abschnitt des Rohrs hergestellt ist.

9. Anlage, die ein Rohr und eine Messvorrichtung nach Anspruch 8 umfasst, wobei das Rohr einen Abschnitt enthält, der sich entlang einer Längsachse erstreckt und die Form eines Rotationszylinders aufweist,
wobei das Verformungsmesselement so angeordnet ist, dass es eine Änderung einer mechanischen Komponente einer lokalen Verformung des Messbereichs entlang einer jeweiligen Messrichtung misst, wobei die Messrichtung mit einer Ebene senkrecht zur Mittelachse einen Winkel definiert, dessen Wert wie folgt ist:

[Math 1]

$$\phi_{\Delta P} = \pm \arctan(\sqrt{v}) \bmod \pi$$

oder

[Math 2]

$$\phi_{\Delta F} = \pm \arctan\left(\sqrt{\frac{(1+v)\rho_0^2 + (1-v)r^2}{2vr^2}}\right) \bmod \pi$$

**Claims**

1. Measurement method comprising, for at least one measurement zone of a portion of a pipe, which portion of the pipe has a cylindrical shape and extending along a central axis, the steps of:

- measuring a power and a frequency of a Brillouin line of backscattered radiation to determine a variation in a mechanical component, according to a measuring direction associated with said measurement zone, of a corresponding local deformation of the pipe, the mechanical component being the deformation component which is independent of the thermal deformation of the pipe;
- determining a variation in a first pressure from among an internal pressure of the pipe and an external pressure applied to the pipe from the outside; and
- computing:

a) a variation in a second pressure from among the internal pressure and the external pressure, which is different from the first pressure, based solely on the variation in the mechanical component of the measured deformation and the variation in the first determined pressure, the measuring direction defining, with a plane normal to the central axis, a measurement angle $\phi_{\Delta P}$ equal to:

[Math 1]

$$\phi_{\Delta P} = \pm \arctan\left(\sqrt{v}\right) \bmod \pi$$

and/or
b) a variation in a longitudinal force exerted on the pipe based solely on the variation in the mechanical component of the measured deformation and the variation in the first determined pressure, the measuring direction defining, with the plane normal to the central axis, a measurement angle $\varphi_{\Delta F}$ equal to:

[Math 2]

$$\phi_{\Delta P} = \pm \arctan\left(\sqrt{\frac{(1+v)\rho_0^2 + (1-v)r^2}{2vr^2}}\right) \bmod \pi$$

where "arctan" is the arctangent function;
r is a distance of the measurement zone from the central axis;
$\rho_0$ is a quantity equal to an outer radius $r_{0,ext}$ of the portion of the pipe at a predetermined reference time, if the first pressure is the external pressure, and to an inner radius $r_{0,int}$ of the portion of the pipe at the predetermined reference time, if the first pressure is the internal pressure; and
v is the Poisson's ratio of the material from which the portion of a pipe is made.

2. Measurement method according to claim 1, wherein, for at least one measurement zone, the first pressure is the external pressure and the second pressure is the internal pressure, the variation in the internal pressure being computed, during step (a), according to:

[Math 3]

$$\Delta P_{int} = \frac{r^2 E\left(r_{0,ext}^2 - r_{0,int}^2\right)}{r_{0,int}^2 \left[r_{0,ext}^2 + (1-2v)r^2\right]} \Delta\varepsilon_{mec,mes} + \frac{r_{0,ext}^2 \left[r_{0,int}^2 + (1-2v)r^2\right]}{r_{0,int}^2 \left[r_{0,ext}^2 + (1-2v)r^2\right]} \Delta P_{ext}$$

where $\Delta P_{int}$ is the variation in the internal pressure;
$\Delta P_{ext}$ is the variation in the determined external pressure;
E is the Young's modulus of the material from which the portion of the pipe is made; and
$\Delta\varepsilon_{mec,mes}$ is the variation in the mechanical component of the measured deformation.

3. Measurement method according to claim 1 or 2, wherein, for at least one measurement zone, the first pressure is the external pressure, the variation in the longitudinal force being computed, during step (b), according to:

[Math 4]

$$\Delta F = \frac{\pi E(r_{0,ext}^2 - r_{0,int}^2)(r^2 + r_{0,ext}^2)}{r_{0,ext}^2 + (1-2v)r^2} \Delta\varepsilon_{mec,mes} - \frac{2\pi v r_{0,ext}^2(r_{0,ext}^2 - r_{0,int}^2)}{r_{0,ext}^2 + (1-2v)r^2} \Delta P_{ext}$$

where $\Delta F$ is the variation in longitudinal force;

$\Delta P_{ext}$ is the variation in the determined external pressure;

E is the Young's modulus of the material from which the portion of the pipe is made; and

$\Delta\varepsilon_{mec,mes}$ is the variation in the mechanical component of the measured deformation.

4. Measurement method according to any one of claims 1 to 3, wherein, for at least one measurement zone, the first pressure is the internal pressure and the second pressure is the external pressure, the variation in the external pressure being computed, during step (a), according to:

[Math 5]

$$\Delta P_{ext}=-\frac{r^2 E\left(r_{0,ext}^2 - r_{0,int}^2\right)}{r_{0,ext}^2\left[r_{0,int}^2 + (1-2v)r^2\right]}\Delta\varepsilon_{mec,mes} + \frac{r_{0,int}^2\left[r_{0,ext}^2 + (1-2v)r^2\right]}{r_{0,ext}^2\left[r_{0,int}^2 + (1-2v)r^2\right]}\Delta P_{int}$$

where $\Delta P_{ext}$ is the variation of the external pressure;

$\Delta P_{int}$ is the variation in the determined internal pressure;

E is the Young's modulus of the material from which the portion of the pipe is made; and

$\Delta\varepsilon_{mec,mes}$ is the variation in the mechanical component of the measured deformation.

5. Measurement method according to any one of claims 1 to 4, wherein, for at least one measurement zone, the first pressure is the internal pressure, the variation in the longitudinal force being computed, during step (b), according to:

[Math 6]

$$\Delta F=\frac{\pi E(r_{0,ext}^2 - r_{0,int}^2)(r^2 + r_{0,int}^2)}{r_{0,int}^2 + (1-2v)r^2}\Delta\varepsilon_{mec,mes} - \frac{2\pi v r_{0,int}^2(r_{0,ext}^2 - r_{0,int}^2)}{r_{0,int}^2 + (1-2v)r^2}\Delta P_{int}$$

where $\Delta F$ is the variation in longitudinal force;

$\Delta P_{int}$ is the variation in the determined internal pressure;

E is the Young's modulus of the material from which the portion of the pipe is made; and

$\Delta\varepsilon_{mec,mes}$ is the variation in the mechanical component of the measured deformation.

6. Measurement method according to any one of claims 1 to 5, wherein, for at least one measurement zone, measuring the variation in the corresponding mechanical deformation component comprises implementing an optical fibre attached to said measurement zone, the optical fibre extending in the corresponding measuring direction, so as to form a distributed Brillouin and Rayleigh sensor.

7. Measurement method according to any one of claims 1 to 6, wherein N measurement zones are circumferentially distributed every $2\pi/N$ about the central axis, N being an integer strictly greater than 1.

8. Measuring device for measuring a pressure and/or a longitudinal force applied to a pipe, the pipe including a portion having a cylindrical shape and extending along a central axis, the measuring device comprising a deformation measuring member and a computer,

the deformation measuring member being configured to measure a power and a frequency of a Brillouin line of backscattered radiation to determine a variation in a mechanical component of a local deformation of at least one measurement zone of the portion of the pipe in an associated measuring direction, the mechanical component being the deformation component that is independent of the thermal deformation of the pipe,

the computer being configured to compute:

a) a variation in a second pressure from among an internal pressure of the pipe and an external pressure applied to the pipe from the outside, based solely on the variation in the mechanical component of the measured deformation and a variation in a first pressure, which is different from the second pressure, the measuring direction defining, with a plane normal to the central axis, a measurement angle $\phi_{\Delta P}$ equal to:

[Math 1]

$$\phi_{\Delta P} = \pm \arctan\left(\sqrt{v}\right) \bmod \pi$$

and/or

b) a variation in a longitudinal force exerted on the pipe based solely on the variation in the mechanical component of the measured deformation and the variation in the first pressure, the measuring direction defining, with the plane normal to the central axis, a measurement angle $\phi_{\Delta F}$ equal to:

[Math 2]

$$\phi_{\Delta F} = \pm \arctan\left(\sqrt{\frac{(1+v)\rho_0^2 + (1-v)r^2}{2vr^2}}\right) \bmod \pi$$

where "arctan" is the arctangent function;

r is a distance of the measurement zone from the central axis;

$\rho_0$ is a quantity equal to an outer radius $r_{0,ext}$ of the portion of the pipe at a predetermined reference time, if the first pressure is the external pressure, and to an inner radius $r_{0,int}$ of the portion of the pipe at the predetermined reference time, if the first pressure is the internal pressure; and

v is the Poisson's ratio of the material from which the portion of the pipe is made.

9. Apparatus comprising a pipe and a measuring device according to claim 8, the pipe comprising a portion extending along a longitudinal axis and having an axisymmetric shape,

the deformation measuring member being arranged so as to measure a variation in a mechanical component of a local deformation of said measurement zone in a respective measuring direction, the measuring direction defining, with a plane normal to the central axis, an angle the value of which is:

[Math 1]

$$\phi_{\Delta P} = \pm \arctan\left(\sqrt{v}\right) \bmod \pi$$

or

[Math 2]

$$\phi_{\Delta F} = \pm \arctan\left(\sqrt{\frac{(1+v)\rho_0^2 + (1-v)r^2}{2vr^2}}\right) \bmod \pi$$

FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2864202

- WO 2009032881 A1